# EUROPEAN PATENT SPECIFICATION

(11) **EP 4 221 977 B1**
(45) Date of publication and mention of the grant of the patent: **25.11.2026**
(21) Application number: 21876439.7
(22) Date of filing: 30.09.2021
(51) Int. Cl.: C08F 8/14, C08F 220/06, C03C 25/1095, C03C 25/285, D04H 1/4209, D04H 1/4218, D04H 1/587, D04H 1/64, E04B 1/78

(54) **ADDITIVES FOR BINDER COMPOSITIONS IN FIBROUS INSULATION PRODUCTS**
ADDITIVE FÜR BINDEMITTELZUSAMMENSETZUNGEN IN FASERDÄMMSTOFFEN
ADDITIFS POUR COMPOSITIONS DE LIANT DANS DES PRODUITS D'ISOLATION FIBREUX

(30) Priority: 01.10.2020 US 202063086271 P
(43) Date of publication of application: 09.08.2023
(73) Proprietor: Owens Corning Intellectual Capital, LLC, Toledo, OH 43659 (US); Paroc Group Oy, 00180 Helsinki (FI)
(72) Inventor: CLICK, Kevin, Columbus, OH 43214 (US); CHEN, Liang, New Albany, OH 43054 (US); MUELLER, Gert, New Albany, OH 43054 (US); PETTERSSON, Charlotte, 20880 Turku (FI); ZHANG, Xiujuan, New Albany, OH 43054 (US)
(74) Representative: Novagraaf Group
(86) International application number: PCT/US2021/052755
(87) International publication number: WO 2022/072568

(56) References cited:
- EP-A1- 1 942 119
- WO-A1-2017/074853
- WO-A1-2019/074867
- WO-A1-2020/068622
- WO-A2-02/077038
- DE-A1- 102004 024 380
- US-A1- 2019 382 628
- US-B1- 6 699 945
- US-B2- 9 290 640

## Description

### CROSS-REFERENCE TO RELATED APPLICATION(S)

This application claims priority to and any benefit of U.S. Provisional Application No. 63/086,271, filed October 1, 2020.

### BACKGROUND

Aqueous binder compositions are conventionally utilized in the formation of woven and non-woven fibrous products, such as insulation products, composite products, wood fiber board, and the like. Insulation products, for example insulation products formed of inorganic fibers, are typically manufactured by fiberizing a molten glass or mineral- based composition and spinning fibers from a fiberizing apparatus, such as a rotating spinner. To form an insulation product, fibers produced by a rotating spinner are drawn downwardly from the spinner towards a conveyor by a blower. As the fibers move downward, a binder material is sprayed onto the fibers and the fibers are collected into a high loft, continuous blanket on the conveyor. The binder material gives the insulation product resiliency for recovery after packaging and provides stiffness and handleability so that the insulation product can be handled and applied as needed in the insulation cavities of buildings. The binder composition also provides protection to the fibers from interfilamentous abrasion and promotes compatibility between the individual fibers. The blanket containing the binder-coated fibers is then passed through a curing oven and the binder is cured to set the blanket to a desired thickness.

After the binder has cured, the fiber insulation may be cut into lengths to form individual insulation products, and the insulation products may be packaged for shipping to customer locations. Insulation products prepared in this manner can be provided in various forms including batts, blankets, and boards (heated and compressed batts) for use in different applications.

Mineral fiber products generally comprise man-made vitreous fibers (MMVF), such as, for example, glass fibers, ceramic fibers, basalt fibers, slag wool, mineral wool, and stone wool, which are bound together by a polymeric binder composition. Traditional binder compositions used for mineral fiber insulation, and particularly particular mineral wool insulation, are based on phenol-formaldehyde (PF) resins, as well as PF resins extended with urea (PUF resins). However, while such binder compositions provide suitable properties to the insulation products, formaldehyde binders emit undesirable emissions during the manufacturing process and there has been a desire to move away from the use of formaldehyde-based binders.

As an alternative to formaldehyde-based binders, certain formaldehyde-free formulations have been developed for use as a binder in insulation products. Such formaldehyde-free formulations may include a polycarboxylic acid with a polyhydroxy component that are intended to crosslink via an esterification reaction. Such polycarboxylic acid-based binder compositions are often acidic in nature, with a pH less than 5. Mineral wool fibers, however, are highly alkaline, with a higher concentration of bi- and tri-valent metal oxides in the fibers than other inorganic fibers, such as fiberglass. Thus, polycarboxylic acid groups in the traditional binder compositions irreversibly react with the metal oxides of the mineral wool fibers upon application, which blocks the acid groups from being available for an esterification reaction with the polyhydroxy crosslinking agents. Accordingly, acidic binders tend to lack the strength of PF binder when used with mineral wool and products formed therefrom demonstrate insufficient performance.

Additionally, formaldehyde-free binder compositions tend to be sticky and possess a tackiness that causes issues on the processing line. For instance, the tackiness of binder-coated fibers on an in-line ramp causes the fibers to stick to the ramp, creating defects in the downstream insulation products when removed from the processing equipment. Prior attempts to lower the binder tackiness, such as by increasing binder moisture, have produced very hydrophilic insulation products with increased and unacceptable water absorption levels.

Accordingly, there is a need for a non-acidic formaldehyde-free binder composition for use in the production of fibrous insulation products with reduced tackiness, while improving the hydrophobicity and overall insulation product properties.

Formaldehyde-free, non-acidic, aqueous binder compositions comprising a polymeric crosslinking agent with at least two carboxylic acid groups, and a short-chain polyol, are disclosed in WO 2022/072568 A1.

### SUMMARY

The present invention relates to a low-tack aqueous binder composition, as defined in claim 1. A further aspect of the present invention is a fibrous insulation product, as defined in claim 12. Particular embodiments of the invention are defined in the dependent claims.

Embodiments of the present invention are directed to a low-tack aqueous binder composition comprising at least 30.0% by weight of a polymeric crosslinking agent comprising at least two carboxylic acid groups, based on the total solids content of the binder composition; 10.0% to 50.0% by weight of a polyol having at least two hydroxyl groups, based on the total solids content of the binder composition; wherein the polyol comprises a sugar alcohol, an alkanolamine, pentaerythritol, or mixtures thereof; 1.5% to 15.0% by weight of an additive blend comprising one or more process additives, based on the total solids content of the binder composition; and 0 to 3.0% by weight of a silane coupling agent, based on the total solids content of the binder composition. The aqueous binder composition is free of added formaldehyde. The aqueous binder composition has an uncured pH between 4.0 and 7.0 and an uncured a peak tack force of no greater than 80 grams at 60% binder solids.

The process additives comprise surfactants, glycerol, monooleate polyethylene glycol, silicone, polydimethylsiloxane, waxes, or mixtures thereof.

In any of the exemplary embodiments, the additive blend comprises at least two process additives.

In any of the exemplary embodiments, the additive blend may comprise glycerol in an amount of 5.0% to 15.0% by weight, based on the total solids content of the binder composition.

In any of the exemplary embodiments, the additive blend may comprise 0.5% to 2.0% by weight silane coupling agent, based on the total solids content of the binder composition.

In any of the exemplary embodiments, the additive blend may comprise 7.0% to 12% by weight of glycerol and 0.5% to 5.0% by weight of polydimethylsiloxane, based on the total solids content of the binder composition.

The sugar alcohol comprises erythritol, arabitol, xylitol, sorbitol, maltitol, mannitol, iditol, isomaltitol, lactitol, cellobitol, palatinitol, maltotritol, syrups thereof, or mixtures thereof.

In any of the exemplary embodiments, the polymeric crosslinking agent may comprise a homopolymer or copolymer of acrylic acid.

In any of the exemplary embodiments, the composition may comprise 50% to 85% of a polymeric carboxylic acid having at least two carboxylic groups, based on the total solids content of the binder composition; 1.5% to 15% by weight of an additive blend, based on the total solids content of the binder composition, wherein the additive blend comprises one or more of: 6.5% to 13.0% by weight glycerol, based on the total solids content of the binder composition; and 1.2% to 3.5% by weight polydimethylsiloxane, based on the total solids content of the binder composition; and 0.5 to 3.0% by weight of a silane coupling agent.

Further aspects of the present invention are directed to a fibrous insulation product comprising a plurality of randomly oriented fibers and a cross-linked formaldehyde-free binder composition at least partially coating the fibers. Prior to crosslinking, the binder composition has an uncured pH between 4.0 and 7.0 and comprises an aqueous composition including the following components: at least 30% by weight of a polymeric crosslinking agent comprising at least two carboxylic acid groups, based on the total solids content of the binder composition; 10.0 to 50.0% by weight of a polyol having at least two hydroxyl groups, wherein the polyol comprises a sugar alcohol, an alkanolamine, pentaerythritol, or mixtures thereof, based on the total solids content of the binder composition; 1.5 to 15.0% by weight of an additive blend comprising one or more process additives, based on the total solids content of the binder composition; and 0 to 3.0% by weight of a silane coupling agent, wherein the aqueous binder composition is free of added formaldehyde. In any of the exemplary embodiments, the fibrous products, at an LOI of 2.4% or below, has a tensile strength in the machine direction according to EN1608 of between 3.0 kPa and 8 kPa.

The process additives comprise one or more of surfactants, glycerol, monooleate polyethylene glycol, silicone, polydimethylsiloxane, or waxes.

In any of the exemplary embodiments, the process additives may comprise one or more of glycerol or polydimethylsiloxane.

In any of the exemplary embodiments, the additive blend may comprise at least two process additives.

In any of the exemplary embodiments, the additive blend may comprise glycerol in an amount of 5.0 to 15% by weight, based on the total solids content of the binder composition.

In any of the exemplary embodiments, the additive blend may comprise 0.5 to 2.0% by weight silane coupling agent, based on the total solids content of the binder composition.

The fibrous insulation product may comprise a mineral wool insulation product or a fiberglass insulation product.

In any of the exemplary embodiments, the bottom surface of the insulation product may demonstrate water absorption of 0.2 kg/m² or less after 1 day according to EN1609.

In any of the exemplary embodiments, the fibrous product, at an LOI of 2.4% or below, may comprise a compressive strength of at least 1.0 kPa.

Yet further exemplary aspects of the present disclosure are directed to a method for producing a fibrous insulation product with reduced product sticking, comprising applying an aqueous binder composition to a plurality of fibers, gathering the fibers onto a substrate, forming a binder-infused fibrous pack; and curing the binder-infused fibrous pack. The aqueous binder composition comprises 1.5 to 15.0 wt.% solids of an additive blend comprising one or more process additives, selected from the group consisting of surfactants, glycerol, 1,2,4-butanetriol, 1,4-butanediol, 1,2-propanediol, 1,3-propanediol, poly(ethylene glycol), monooleate polyethylene glycol, silicone, polydimethylsiloxane, mineral, paraffin, or vegetable oils, waxes, hydrophobized silica, ammonium phosphates, or mixtures thereof; and 0.5 to 3.0% by weight of a silane coupling agent. Prior to curing, the aqueous binder composition may have a peak tack force of no greater than 80 grams at 60% binder solids.

In any of the exemplary embodiments, the fibrous insulation product, at an LOI of 2.4% or below, may have a tensile strength in the machine direction according to EN1608 of between 3.0 kPa and 8 kPa.

The above-described method may further comprises the step of applying a silane coupling agent to the plurality of fibers, prior to gathering the fibers onto the substrate.

In any of the exemplary embodiments, the additive blend comprises at least two process additives.

Yet further exemplary aspects of the present invention are directed to a formaldehyde-free aqueous binder composition having a reduced tackiness comprising at least 30% by weight of a polymeric polycarboxylic acid crosslinking agent comprising at least two carboxylic acid groups, based on the total solids content of the aqueous binder composition; 10.0 to 50.0% by weight of a polyol having at least two hydroxyl groups, based on the total solids content of the aqueous binder composition, wherein the polyol comprises a sugar alcohol, an alkanolamine, pentaerythritol, or mixtures thereof; 1.5 to 15.0% by weight of an additive blend, based on the total solids content of the aqueous binder composition, the additive blend comprising one or more process additives; and 0.5 to 3.0% by weight of a silane coupling agent, based on the total solids content of the aqueous binder composition.

In any of the exemplary embodiments, the aqueous binder composition has an uncured pH between 4 and 7 and an uncured a peak tack force of no greater than 80 grams at 60% binder solids.

Numerous other aspects, advantages, and/or features of the present disclosure will become more readily apparent from the following detailed description of exemplary embodiments and from the accompanying drawings being submitted herewith.

### BRIEF DESCRIPTION OF THE DRAWINGS

The general inventive concepts, as well as illustrative embodiments and advantages thereof, are described below in greater detail, by way of example, with reference to the drawings in which:
FIG. 1 illustrates an exemplary esterification reaction under limited crosslinking due to the formation of carboxylic metal complexes between mineral wool fibers and unprotected carboxylic acid.
FIG. 2 illustrates an exemplary esterification reaction with a partially protected carboxylic acid-based binder.
FIG. 3 illustrates an exemplary method for producing a mineral wool product according to the present invention.

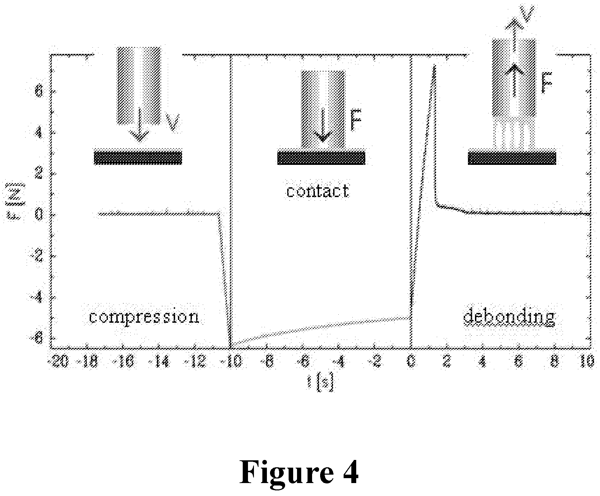

FIG. 4 illustrates a graphical overview of the method for measuring binder tack, as provided herein.
FIG. 5 graphically illustrates the results of tack testing on various exemplary binder compositions.

### DETAILED DESCRIPTION

Unless otherwise defined, all technical and scientific terms used herein have the same meaning as commonly understood by one of ordinary skill in the art to which these exemplary embodiments belong. The terminology used in the description herein is for describing exemplary embodiments only and is not intended to be limiting of the exemplary embodiments. Accordingly, the general inventive concepts are not intended to be limited to the specific embodiments illustrated herein. Although other methods and materials similar or equivalent to those described herein can be used in the practice or testing of the present invention, the preferred methods and materials are described herein.

As used in the specification and the appended claims, the singular forms "a," "an," and "the" are intended to include the plural forms as well, unless the context clearly indicates otherwise.

By "substantially free" it is meant that a composition includes less than 1.0 wt.% of the recited component, including no greater than 0.8 wt.%, no greater than 0.6 wt.%, no greater than 0.4 wt.%, no greater than 0.2 wt.%, no greater than 0.1 wt.%, and no greater than 0.05 wt.%. In any of the exemplary embodiments, "substantially free" means that a composition includes no greater than 0.01 wt.% of the recited component.

Unless otherwise indicated, all numbers expressing quantities of ingredients, chemical and molecular properties, reaction conditions, and so forth used in the specification and claims are to be understood as being modified in all instances by the term "about." Accordingly, unless indicated to the contrary, the numerical parameters set forth in the specification and attached claims are approximations that may vary depending upon the desired properties sought to be obtained by the present exemplary embodiments. At the very least, each numerical parameter should be construed in light of the number of significant digits and ordinary rounding approaches.

Unless otherwise indicated, any element, property, feature, or combination of elements, properties, and features, may be used in any embodiment disclosed herein, regardless of whether the element, property, feature, or combination of elements, properties, and features was explicitly disclosed in the embodiment. It will be readily understood that features described in relation to any particular aspect described herein may be applicable to other aspects described herein provided the features are compatible with that aspect. In particular: features described herein in relation to the method may be applicable to the fibrous product and *vice versa;* features described herein in relation to the method may be applicable to the aqueous binder composition and *vice versa;* and features described herein in relation to the fibrous product may be applicable to the aqueous binder composition and *vice versa.*

Every numerical range given throughout this specification and claims will include every narrower numerical range that falls within such broader numerical range, as if such narrower numerical ranges were all expressly written herein.

The present disclosure relates to formaldehyde-free or "no added formaldehyde" aqueous binder compositions for use with inorganic fibers, such as glass or mineral wool fibers. As used herein, the terms "binder composition," "aqueous binder composition," "binder formulation," "binder," and "binder system' may be used interchangeably and are synonymous. Additionally, as used herein, the terms "formaldehyde-free" or "no added formaldehyde" may be used interchangeably and are synonymous.

The binder composition may be used in the manufacture of fiber insulation products and related products, such as fiber-reinforced mats, veils, nonwovens, etc. (all hereinafter referred to generically as fibrous products). The binder composition may particularly be used with rock or mineral wool products, such as mineral wool insulation products, made with the cured binder composition. Other products may include composite products, wood fiber board products, metal building insulation, pipe insulation, ceiling board, ceiling tile, "heavy density" products, such as board products including, for example, ceiling board, duct board, foundation boards, pipe and tank insulation, sound absorption boards, acoustical panels, general board products, duct liners, and also "light density" products including, for example, residential insulation, duct wrap, metal building insulation, flexible duct media. Further fibrous products include non-woven fiber mats and particle boards, and composite products manufactured therefrom.

The present invention is directed to improved formaldehyde-free binder compositions for use in the manufacture of insulation products, and particularly fibrous insulation products. The binder compositions demonstrate improved processability, hydrophobicity, and product performance, due to the inclusion of a novel additive blend.

Suitable fibers for use in the fibrous products of the present disclosure include, but are not limited to, mineral fibers (e.g., mineral wool, rock wool, stone wool, slag wool, and the like), glass fibers, carbon fibers, ceramic fibers, natural fibers, and synthetic fibers. In certain exemplary embodiments, the plurality of randomly oriented fibers are mineral wool fibers, including, but not limited to mineral wool fibers, rock wool fibers, slag wool fibers, stone wool fibers, or combinations thereof.

The fibrous insulation products may be formed entirely of one type of fiber, or they may be formed of a combination of two or more types of fibers. For example, the insulation products may be formed of combinations of various types of mineral fibers or various combinations of different inorganic fibers and/or natural fibers depending on the desired application. In certain exemplary embodiments the insulation products are formed entirely of mineral wool fibers.

Compared to glass fibers used for manufacturing insulation products, mineral wool generally has a higher percentage of bi- and tri-valent metal oxides. Table 1 provides the typical glass wool formulation ranges and typical stone (or mineral) wool formulation ranges. Guldberg, Marianne, et al. "The Development of Glass and Stone Wool Compositions with Increased Biosolubility" Regulatory Toxicology and Pharmacology 32, 184-189 (2000). As shown below, glass wool has a total weight percentage of bi- and tri- valent oxides (CaO/MgO/Al₂O₃/FeO) that is no greater than 25 wt.%. In contrast, mineral or stone wool comprise a minimum of 25 wt.% bi- and tri-valent metal oxides, or, in some instances, greater than 30 wt.% bi-and tri-valent metal oxides, and in some instances at least 50 wt.% bi-and tri-valent metal oxides. Such metal oxides, particularly aluminum, have a strong tendency to complex with acidic functionalities, such as carboxylic acids, which inhibits binder wetting on the fibers and prevents sufficient esterification and crosslinking. Accordingly, traditional acidic formaldehyde-free binders that are used in the manufacture of fiberglass insulation show decreased performance with mineral wool fibers.

**TABLE 1**

| Traditional Insulation Wool Compositions (in Weight%) | | |
|---|---|---|
| | Glass wool traditional: Typical ranges | Stone wool traditional: Typical ranges |
| SiO₂ | 60-70 | 43-50 |
| Al₂O₃ | 3-7 | 6-15 |
| TiO₂ | <0.1 | 0.5-3.5 |
| FeO | <0.5 | 3-8 |
| CaO | 5-13 | 10-25 |
| MgO | 0-5 | 6-16 |
| Na₂O | 13-18 | 1-3.5 |
| K₂O | 0-2.5 | 0.5-2 |
| B₂O₃ | 3-7 | <1 |
| P₂O₅ | <0.1 | <1 |

Binder compositions are typically applied to the fibers as an aqueous solution or dispersion shortly after the fibers are formed and then cured at elevated temperatures. As used herein, "dispersion" includes all forms of solids dispersed in a liquid medium, regardless of the size of the particle or properties of the dispersion, including true "solutions" in which the solids are soluble and dissolved in the liquid medium. The curing conditions of the binder composition are selected both to evaporate any remaining solvent and cure the binder to a thermoset state. The fibers in the resulting product tend to be at least partially coated with a thin layer of the thermoset resin and exhibit accumulations of the binder composition at points where fibers touch or are positioned closely adjacent to each other.

Previous methods for decreasing the tackiness of formaldehyde-free binder compositions included adding moisture, which increased the moisture content of the binder by up to 50%. However, such an increase in moisture content has led to difficulties in completely curing an insulation product under conventional cure conditions. Additionally, increasing the moisture content of the binder composition increases the binder hydrophilicity, which causes issues Accordingly, alternative methods for reducing the tackiness of formaldehyde-free binder compositions are needed that will not lead to issues with incomplete curing or increased water absorption levels.

Accordingly, a novel additive blend comprising one or more processing additives has been surprisingly discovered that improves the processability of the binder composition by reducing the tackiness of the binder, resulting in a more uniform insulation product with an increased tensile strength and hydrophobicity. Although there may be various additives capable of reducing the tackiness of a binder composition, conventional additives are hydrophilic in nature, such that the inclusion of such additives increases the overall water absorption of the binder composition.

Thus, the novel additive blend provides a precise balance between reduction in binder tackiness, while also improving the hydrophobicity of insulation products formed with the binder composition. This additive blend further provides an improvement in the overall tensile strength of the insulation product, compared to insulation products manufactured using otherwise comparable binder compositions that do not include the novel additive blend.

As mentioned above, the additive blend comprises one or more processing additives. Examples of processing additives include surfactants, monooleate polyethylene glycol (MOPEG), silicone, dispersions of polydimethylsiloxane (PDMS), and waxes such as amide waxes (e.g., ethylene bis-stearamide (EBS)) and carnauba wax (e.g., ML-155)), and glycerol. The surfactants may include non-ionic surfactants, including non-ionic surfactants with an alcohol functional groups. Exemplary surfactants include Surfynol^{®}, alkyl polyglucosides (e.g., Glucopon^{®}), and alcohol ethoxylates (e.g., Lutensol^{®}).

In any of the embodiments disclosed herein, the additive blend may include a single processing additive, a mixture of at least two processing additives, a mixture of at least three processing additives, or a mixture of at least four processing additives. In any of the embodiments disclosed herein, the additive blend comprises a mixture of glycerol and polydimethylsiloxane.

The additive blend is present in the binder composition in an amount from 1.5% to 15.0% by weight, or from about 3.0% to 12.0% by weight, or from 5.0% to 10.0% by weight based on the total solids content in the binder composition. In any of the exemplary embodiments, the binder composition may comprise at least 7.0% by weight of the additive blend, including at least 8.0% by weight, and at least 9% by weight, based on the total solids content in the binder composition. Accordingly, in any of the exemplary embodiments, the aqueous binder composition may comprise 7.0% to 15% by weight of the additive blend, including 8.0% by weight to 13.5% by weight, 9.0% by weight to 12.5% by weight, based on the total solids content in the binder composition.

In embodiments wherein the additive blend comprises glycerol, the glycerol may be present in an amount from at least 5.0% by weight, or at least 6.0% by weight, or at least 7.0% by weight, or at least 7.5% by weight, based on the total solids content of the binder composition. In any of the exemplary embodiments, the binder composition may comprise 5.0 to 15% by weight of glycerol, including 6.5 to 13.0% by weight, 7.0 to 12.0% by weight, and 7.5 to 11.0% by weight of glycerol, based on the total solids content of the binder composition.

In embodiments wherein the additive blend comprises polydimethylsiloxane, the polydimethylsiloxane may be present in an amount from at least 0.2% by weight, or at least 0.5% by weight, or at least 0.8% by weight, or at least 1.0% by weight, or at least 1.5% by weight, or at least 2.0% by weight, based on the total solids content of the binder composition. In any of the exemplary embodiments, the binder composition may comprise 0.5 to 5.0% by weight of polydimethylsiloxane, including 1.0 to 4.0% by weight, 1.2 to 3.5% by weight, 1.5 to 3.0% by weight, and 1.6 to 2.3% by weight of polydimethylsiloxane, based on the total solids content of the binder composition.

In any of the embodiments disclosed herein, the additive blend may comprise a mixture of glycerol and polydimethylsiloxane, wherein the glycerol comprises 7.0 to 12% by weight of the binder composition and the polydimethylsiloxane comprises 1.2 to 3.5% by weight of the binder composition, based on the total solids content of the binder composition.

In any of the embodiments disclosed herein, the additive blend may comprise an increased concentration of a silane coupling agent. Conventional binder compositions generally comprise less than 0.5 wt.% silane and more commonly about 0.2 wt.% or less, based on the total solids content of the binder composition. Compared to mineral wool fibers, higher silane concentrations are generally associated with fiberglass products, as fiberglass is more hydrophilic than mineral wool and thus the silane works both to protect the fiberglass from moisture attack and improve hydrophobicity. However, mineral wool is more hydrophobic than fiberglass and thus the silane is not needed to protect the fiber from moisture. Rather, the silane is typically included at lower levels in mineral wool insulation manufacture, compared to fiberglass. It has been surprisingly discovered, however, that an increased silane concentration for mineral wool products (at least 0.5%), based on the total solids content of the binder composition, is beneficial to improve the tensile strength of the insulation product produced therefrom. Accordingly, in any of the embodiments disclosed herein, the silane coupling agent(s) may be present in the binder composition in an amount from 0.5% to 2.5% by weight of the total solids in the binder composition, including from about 0.7% to 2.5% by weight, from 0.85% to 2.0% by weight, or from 0.95% to 1.5% by weight. In any of the embodiments disclosed herein, the silane coupling agent(s) may be present in the binder composition in an amount up to 1.0% by weight.

The silane concentration may further be characterized by the amount of silane on the fibers in a fibrous insulation product. Typically, fiberglass insulation products comprise between 0.001% by weight and 0.03% by weight of the silane coupling agent on the glass fibers. However, by increasing the amount of silane coupling agent that is included applied to the fibers, the amount of silane on the glass fibers increases to at least 0.10% by weight. With regard to mineral wool insulation products, the amount of silane typically on the fibers is between about 0.0006% by weight to about 0.0015% by weight at an LOI of 0.3% and between about 0.01% by weight and 0.02% by weight at an LOI of 5%. By increasing the amount of silane coupling agent that is applied to the fibers, the amount of silane on the fibers increases to at least 0.003% by weight at an LOI of 0.3% and at least 0.05 at an LOI of 5%.

Alternatively, or in addition to inclusion of the additive blend or silane coupling agent in the binder composition, the additive blend and/or silane may be added to the fibers and/or the processing line separate from the binder composition. For instance, the additive blend and/or silane coupling agent may be sprayed onto the fibers before or after application of the binder composition, prior to the fibers contacting the conveyor.

Alternatively, the binder composition may comprise a conventional amount of silane coupling agent, if any. In such embodiments, the silane coupling agent(s) may be present in the binder composition in an amount from 0 to less than 0.5% by weight of the total solids in the binder composition, including from 0.05% to 0.4% by weight, from 0.1% to 0.35% by weight, or from 0.15% to 0.3% by weight.

Non-limiting examples of silane coupling agents that may be used in the binder composition may be characterized by the functional groups alkyl, aryl, amino, epoxy, vinyl, methacryloxy, ureido, isocyanato, and mercapto. In exemplary embodiments, the silane coupling agent(s) include silanes containing one or more nitrogen atoms that have one or more functional groups such as amine (primary, secondary, tertiary, and quaternary), amino, imino, amido, imido, ureido, or isocyanato. Specific, non-limiting examples of suitable silane coupling agents include, but are not limited to, aminosilanes (e.g., triethoxyaminopropylsilane; 3-aminopropyl-triethoxysilane and 3-aminopropyl-trihydroxysilane), epoxy trialkoxysilanes (e.g., 3-glycidoxypropyltrimethoxysilane and 3-glycidoxypropyltriethoxysilane), methyacryl trialkoxysilanes *(e.g.,* 3-methacryloxypropyltrimethoxysilane and 3-methacryloxypropyltriethoxysilane), hydrocarbon trialkoxysilanes, amino trihydroxysilanes, epoxy trihydroxysilanes, methacryl trihydroxy silanes, and/or hydrocarbon trihydroxysilanes. In one or more exemplary embodiment, the silane is an aminosilane, such as γ-aminopropyltriethoxysilane.

The additive blend may be used in any conventional formaldehyde-free binder composition, such as a carboxylic acid-based binder composition as described in U.S. 2019/0106564 to Zhang et al.*,* which teaches an aqueous binder composition comprising a polycarboxy cross-linking agent, a short-chain polyol, and a long-chain polyol and is fully incorporated by reference. Another formaldehyde-free binder composition is disclosed in U.S. 8,864,893 to Chen et al.*,* which teaches a binder composition comprising at least one carbohydrate and at least one cross-linking agent. U.S. Patent Application No. 17/460,805 to Chen et al. discloses an aqueous binder composition comprising a crosslinking agent comprising at least two carboxylic acids groups, a polyol component comprising at least two hydroxyl groups, and a nitrogen-based protective agent. Generally, formaldehyde-free binder compositions incorporating polycarboxylic acid cross-linking agents are acidic in nature, which may be acceptable for use with fiberglass, however, such acidic binder compositions are generally not compatible with mineral wool.

Although, as mentioned above, the additive blend may be useful in any formaldehyde-free binder composition, exemplary binder compositions are provided in more detail below.

In any of the embodiments disclosed herein, the binder composition includes a crosslinking agent suitable for crosslinking with a polyol component via an esterification reaction. In any of the exemplary embodiments, the crosslinking agent may have a number-average molecular weight greater than 90 Daltons, such as from about 90 Daltons to about 10,000 Daltons, or from about 190 Daltons to about 5,000 Daltons. In any of the exemplary embodiments, the crosslinking agent has a number-average molecular weight of about 2,000 Daltons to 5,000 Daltons, or about 4,000 Daltons.

Non-limiting examples of suitable crosslinking agents include materials having one or more carboxylic acid groups (-COOH), such as monomeric and polymeric polycarboxylic acids, including salts or anhydrides thereof, and mixtures thereof. In any of the exemplary embodiments, the polycarboxylic acid may be a polymeric polycarboxylic acid, such as a homopolymer or copolymer of acrylic acid. Non-limiting examples of suitable crosslinking agents include di-, tri- and polycarboxylic acids (and salts thereof), anhydrides, monomeric and polymeric polycarboxylic acids, malonic acid, succinic acid, glutaric acid, maleic acid, citric acid (including salts thereof, such as ammonium citrate), 1,2,3,4-butane tetracarboxylic acid, adipic acid, and mixtures thereof. The polymeric polycarboxylic acid may comprise polyacrylic acid (including salts or anhydrides thereof) and polyacrylic acid-based resins such as QR-1629S and Acumer 9932, both commercially available from The Dow Chemical Company, polyacrylic acid compositions commercially from CH Polymer, and polyacrylic acid compositions commercially available from Coatex. Acumer 9932 is a polyacrylic acid/sodium hypophosphite resin having a molecular weight of about 4,000 and a sodium hypophosphite content of 6-7 % by weight, based on the total weight of the polyacrylic acid/sodium hypophosphite resin. QR-1629S is a polyacrylic acid/glycerin resin composition. For each type of acid, it should be understood that acid salts may also be used in place of the acids. It should also be understood that mixtures or blends of two or more different polycarboxylic acids may be used.

In any of the exemplary embodiments disclosed herein, the crosslinking agent is present in the binder composition in at least 30% by weight, based on the total solids content of the aqueous binder composition, including, without limitation at least 40% by weight, at least 45% by weight, in at least 50% by weight, at least 54% by weight, at least 56% by weight, at least 58% by weight, at least 60% by weight, at least 62% by weight, at least 64% by weight, at least 66% by weight, at least 68% by weight, and at least 70% by weight. In any of the embodiments disclosed herein, the crosslinking agent may be present in the binder composition in an amount from 30% to 87% by weight, based on the total solids content of the binder composition, including without limitation 30% to 85% by weight, 50% to 80% by weight, greater than 50% to 78% by weight, based on the total solids content of the binder composition, including without limitation 59% to 75% by weight, 61% to 72% by weight, and 63% to 70% by weight, including all endpoints and sub-combinations therebetween.

Optionally, all or a percentage of the acid functionality in the polycarboxylic acid may be temporarily blocked with the use of a protective agent, which temporarily blocks the acid functionality from complexing with the mineral wool fibers, and is subsequently removed by heating the binder composition to a temperature of at least 150 °C, freeing the acid functionalities to crosslink with the polyol component and complete the esterification process, during the curing process. In any of the exemplary embodiments, 10% to 100% of the carboxylic acid functional groups may be temporarily blocked by the protective agent, including between about 25% to about 99%, about 30% to about 90%, and about 40% to 85%, including all subranges and combinations of ranges therebetween. In any of the exemplary embodiments, a minimum of 40% of the acid functional groups may be temporarily blocked by the protective agent.

The protective agent may be capable of reversibly bonding to the carboxylic acid groups of the crosslinking agent. In any of the exemplary embodiments, the protective agent comprises any compound comprising molecules capable of forming at least one reversible ionic bond with a single acid functional group. In any of the exemplary embodiments disclosed herein, the protective agent may comprise a nitrogen-based protective agent, such as an ammonium-based protective agent; an amine-based protective agent; or mixtures thereof. An exemplary ammonium based protective agent includes ammonium hydroxide. Exemplary amine-based protective agents include alkylamines and diamines, such as, for example ethyleneimine, ethylenediamine, hexamethylenediamine; alkanolamines, such as: ethanolamine, diethanolamine, triethanolamine; ethylenediamine-N,N'-disuccinic acid (EDDS), ethylenediaminetetraacetic acid (EDTA), and the like, or mixtures thereof. In addition, it has been surprisingly discovered that the alkanolamine can be used as both a protecting agent and as a participant in the crosslinking reaction to form ester in the cured binder. Thus, the alkanolamine has a dual-functionality of protective agent and polyol for crosslinking with the polycarboxylic acid via esterification.

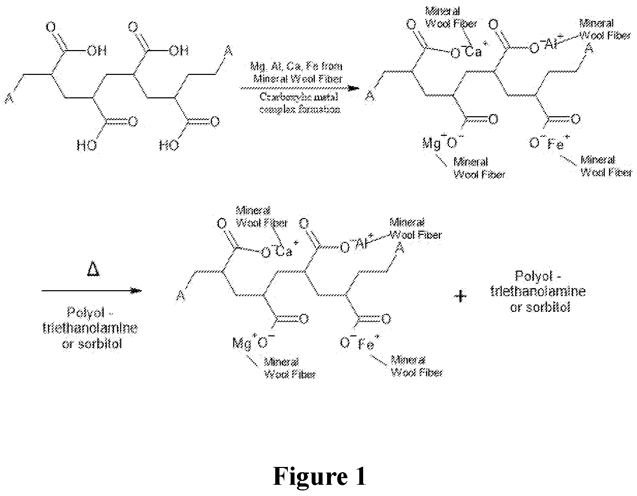

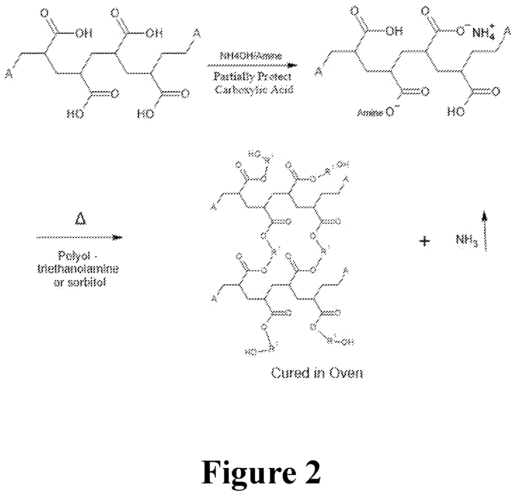

As illustrated in Figure 1, if left unprotected, the carboxylic acid groups in the polycarboxylic acid component will form a carboxylic-metal complex with the metal ions (Mg²⁺, Al³⁺, Ca²⁺, Fe³⁺, Fe²⁺) from the mineral wool fibers. Under such circumstances, as the binder composition is cured, the polyol will have very limited availability to crosslink with the carboxylic acid groups, leading to weak binder performance. In contrast, Figure 2 illustrates the pre-reaction of the polycarboxylic acid with a nitrogen-based protective agent, such as ammonium hydroxide or an amine. Such a pre-reaction temporarily blocks the acid functional groups from permanently reacting with the metal ions. As the binder is cured, ammonia is released, freeing the acid functional groups to react with the polyol via esterification.

Contrary to a conventional pH adjuster, the protective agent, as defined herein, only temporarily and reversibly blocks the acid functional groups in the polymeric polycarboxylic acid component. In contrast, conventional pH adjusters, such as sodium hydroxide, permanently terminate an acid functional group, which prevents crosslinking between the acid and hydroxyl groups due to the blocked acid functional groups. Thus, the inclusion of traditional pH adjusters, such as sodium hydroxide, does not provide the desired effect of temporarily blocking the acid functional groups, while later freeing up those functional groups during to cure to permit crosslinking via esterification. Accordingly, in any of the exemplary embodiments disclosed herein, the binder composition may be free or substantially free of conventional pH adjusters, such as, for example, sodium hydroxide and potassium hydroxide. Such conventional pH adjusters for high temperature applications will permanently bond with the carboxylic acid groups and will not release the carboxylic acid functionality to allow for crosslinking esterification.

Moreover, along with providing a temporary blocking function, the protective agent also increases the pH of the binder composition to provide compatibility with the pH of the mineral wool fiber. If the pH of the binder composition is significantly lower than the pH of the fiber, the binder composition can damage the mineral fiber, which changes the composition and weakens the fiber. The function of the binder composition is to adhere the fibers together and should not react with the fiber itself.

The pH of the binder composition in an un-cured state may be adjusted depending on the intended application, to facilitate the compatibility of the ingredients of the binder composition, or to function with various types of fibers. As mentioned above, in any of the exemplary embodiments disclosed herein, when in an un-cured state, the pH of the binder composition has a pH of at least 4. In such exemplary embodiments, the pH of the binder composition, when in an un-cured state, is 4.0 - 7.0, including about 4.2 - 6.8, and about 4.5 - 6.5. After cure, the pH of the binder composition may rise to at least a pH of 6.5 and up to pH of 8.5. In any of the exemplary embodiments disclosed herein, the cured pH of the binder composition is between 7.2 and 7.8.

The protective agent may be present in the binder composition in an amount from 0 to 50.0 wt.%, based on the total solids in the binder composition, including without limitation, amounts from 1.50% by weight to 25.0% by weight, or from 2.5% by weight to 15.5% by weight. In any of the exemplary embodiments disclosed herein, the protective agent may be present in the binder composition in at least 3.5% by weight, including at least 4.0% by weight, at least 5.0% by weight, at least 5.5% by weight, and at least 6.0% by weight. In any of the exemplary embodiments, the protective agent may be used in an amount sufficient to block at least 40% of the acid functional groups of the polycarboxylic acid.

In any of the exemplary embodiments, the binder composition includes a ratio of carboxylic acid groups to amine groups ranges from about 6:1 to about 1:1, or from about 4:1 to about 1.5:1.

In any of the exemplary embodiments, the binder composition further includes at least one polyol having two or more hydroxyl groups (also referred to herein as a polyhydroxy compound). In any of the exemplary embodiments, the polyol comprises one or more of monomeric or polymeric polyhydroxy compounds.

The polyol comprises a sugar alcohol, an alkanolamine, pentaerythritol, or mixtures thereof. Sugar alcohol is understood to mean compounds obtained when the aldo or keto groups of a sugar are reduced *(e.g.* by hydrogenation) to the corresponding hydroxy groups. The starting sugar might be chosen from monosaccharides, oligosaccharides, and polysaccharides, and mixtures of those products, such as syrups, molasses and starch hydrolyzates. The starting sugar also could be a dehydrated form of a sugar. Although sugar alcohols closely resemble the corresponding starting sugars, they are not sugars. Thus, for instance, sugar alcohols have no reducing ability, and cannot participate in the Maillard reaction typical of reducing sugars. In any of the exemplary embodiments, the sugar alcohol includes any of erythritol, arabitol, xylitol, sorbitol, maltitol, mannitol, iditol, isomaltitol, lactitol, cellobitol, palatinitol, maltotritol, syrups thereof, and mixtures thereof. In various exemplary embodiments, the sugar alcohol is selected from sorbitol, xylitol, and mixtures thereof.

In any of the exemplary embodiments, the polyol includes sorbitol, pentaerythritol, alkanolamines, or mixtures thereof. In any of the exemplary embodiments, the alkanolamine may comprise triethanolamine. Accordingly, in any of the exemplary embodiments, the polyol comprises one or more of sorbitol, pentaerythritol, triethanolamine, or mixtures thereof.

The polyol is present in the binder composition in an amount up to 50% by weight total solids, including without limitation, up to about 45%, 40%, 35%, 33%, 30%, 27%, 25%, and 20% by weight total solids. The polyol may be present in the binder composition in an amount from 10% to 45%, 13% to 40%, 15% to 38%, 18% to 35%, 20% to 32%, 22% to 30%, and 17% to 27% by weight total solids, including all endpoints and sub-combinations therebetween. In any of the exemplary embodiments, the polyol may be present in an amount to provide a ratio of carboxylic acid groups to hydroxyl groups from 10:1 to 0.2:1, or from 3:1 to 0.5:1.

In any of the embodiments disclosed herein, the aqueous binder composition may be free or substantially free of polyols comprising less than 3 hydroxyl groups, or free or substantially free of polyols comprising less than 4 hydroxyl groups. In any of the embodiments disclosed herein, the aqueous binder composition is free or substantially free of polyols having a number average molecular weight of 2,000 Daltons or above, such as a molecular weight between 3,000 Daltons and 4,000 Daltons. Accordingly, in any of the embodiments disclosed herein, the aqueous binder composition is free or substantially free of diols, such as glycols; triols, such as, for example, glycerol and triethanolamine; and/or polymeric polyhydroxy compounds, such as polyvinyl alcohol, polyvinyl acetate, which may be partially or fully hydrolyzed, or mixtures thereof.

In any of the exemplary embodiments, the binder composition may be free of reducing sugars. A reducing sugar is a type of carbohydrate or sugar that includes a free aldehyde or ketone group and can donate electrons to another molecule. As the binder composition is free of reducing sugars, it is unable to participate in a Maillard reaction, which is a process that occurs when a reducing sugar reacts with an amine. The Maillard reaction results in a binder composition with a brown color, which is undesirable for the subject binder composition.

Optionally, the binder composition may include an esterification catalyst, also known as a cure accelerator. The catalyst may include inorganic salts, Lewis acids (i.e., aluminum chloride or boron trifluoride), Bronsted acids (i.e., sulfuric acid, p-toluenesulfonic acid and boric acid) organometallic complexes *(i.e.,* lithium carboxylates, sodium carboxylates), and/or Lewis bases *(i.e.,* polyethyleneimine, diethylamine, or triethylamine). Additionally, the catalyst may include an alkali metal salt of a phosphorous-containing organic acid; in particular, alkali metal salts of phosphorus acid, hypophosphorus acid, or polyphosphoric. Examples of such phosphorus catalysts include, but are not limited to, sodium hypophosphite, sodium phosphate, potassium phosphate, disodium pyrophosphate, tetrasodium pyrophosphate, sodium tripolyphosphate, sodium hexametaphosphate, potassium phosphate, potassium tripolyphosphate, sodium trimetaphosphate, sodium tetrametaphosphate, and mixtures thereof. In addition, the catalyst or cure accelerator may be a fluoroborate compound such as fluoroboric acid, sodium tetrafluoroborate, potassium tetrafluoroborate, calcium tetrafluoroborate, magnesium tetrafluoroborate, zinc tetrafluoroborate, ammonium tetrafluoroborate, and mixtures thereof. Further, the catalyst may be a mixture of phosphorus and fluoroborate compounds. Other sodium salts such as, sodium sulfate, sodium nitrate, sodium carbonate may also or alternatively be used as the catalyst.

The catalyst may be present in the binder composition in an amount from 0% to 10% by weight of the total solids in the binder composition, including without limitation, amounts from 0 to about 5% by weight, or from about 0.5% to about 4.5% by weight, or from about 1.0% to about 4.0% by weight, or from about 1.15% to about 3.8% by weight, or from about 1.35% to about 2.5% by weight.

The binder composition may further include a surfactant, independent or in addition to any surfactant included in the additive blend. One or more surfactants may be included in the binder composition to assist in binder atomization, wetting, and interfacial adhesion.

The surfactant is not particularly limited, and includes surfactants such as, but not limited to, ionic surfactants *(e.g.,* sulfate, sulfonate, phosphate, and carboxylate); sulfates *(e.g.,* alkyl sulfates, ammonium lauryl sulfate, sodium lauryl sulfate (SDS), alkyl ether sulfates, sodium laureth sulfate, and sodium myreth sulfate); amphoteric surfactants (e.g., alkylbetaines such as lauryl-betaine); sulfonates *(e.g.,* dioctyl sodium sulfosuccinate, perfluorooctanesulfonate, perfluorobutanesulfonate, and alkyl benzene sulfonates); phosphates *(e.g.,* alkyl aryl ether phosphate and alkyl ether phosphate); carboxylates *(e.g.,* alkyl carboxylates, fatty acid salts (soaps), sodium stearate, sodium lauroyl sarcosinate, carboxylate fluorosurfactants, perfluoronanoate, and perfluorooctanoate); cationic (e.g., alkylamine salts such as laurylamine acetate); pH dependent surfactants (primary, secondary or tertiary amines); permanently charged quaternary ammonium cations (e.g., alkyltrimethylammonium salts, cetyl trimethylammonium bromide, cetyl trimethylammonium chloride, cetylpyridinium chloride, and benzethonium chloride); and zwitterionic surfactants, quaternary ammonium salts *(e.g.,* lauryl trimethyl ammonium chloride and alkyl benzyl dimethylammonium chloride), polyoxyethylenealkylamines, and mixtures thereof.

Suitable nonionic surfactants that can be used in conjunction with the binder composition include polyethers (*e.g.*, ethylene oxide and propylene oxide condensates, which include straight and branched chain alkyl and alkaryl polyethylene glycol and polypropylene glycol ethers and thioethers); alkylphenoxypoly(ethyleneoxy)ethanols having alkyl groups containing from about 7 to about 18 carbon atoms and having from about 4 to about 240 ethyleneoxy units *(e.g.,* heptylphenoxypoly(ethyleneoxy) ethanols, and nonylphenoxypoly(ethyleneoxy) ethanols); polyoxyalkylene derivatives of hexitol including sorbitans, sorbides, mannitans, and mannides; partial long-chain fatty acids esters *(e.g.,* polyoxyalkylene derivatives of sorbitan monolaurate, sorbitan monopalmitate, sorbitan monostearate, sorbitan tristearate, sorbitan monooleate, and sorbitan trioleate); condensates of ethylene oxide with a hydrophobic base, the base being formed by condensing propylene oxide with propylene glycol; sulfur containing condensates (*e.g*., those condensates prepared by condensing ethylene oxide with higher alkyl mercaptans, such as nonyl, dodecyl, or tetradecyl mercaptan, or with alkylthiophenols where the alkyl group contains from about 6 to about 15 carbon atoms); ethylene oxide derivatives of long-chain carboxylic acids (*e.g.*, lauric, myristic, palmitic, and oleic acids, such as tall oil fatty acids); ethylene oxide derivatives of long-chain alcohols *(e.g.,* octyl, decyl, lauryl, or cetyl alcohols); and ethylene oxide/propylene oxide copolymers.

In any of the exemplary embodiments, the surfactants may include one or more of Dynol 607, which is a 2,5,8,11-tetramethyl-6-dodecyne-5,8-diol, SURFONYL^{®} 420, SURFONYL^{®} 440, and SURFONYL^{®} 465, which are ethoxylated 2,4,7,9-tetramethyl-5-decyn-4,7-diol surfactants (commercially available from Evonik Corporation (Allentown, Pa.)), Stanfax (a sodium lauryl sulfate), Surfynol 465 (an ethoxylated 2,4,7,9-tetramethyl 5 decyn-4,7-diol), Triton^{™} GR-PG70 (1,4-bis(2-ethylhexyl) sodium sulfosuccinate), and Triton^{™} CF-10 (poly(oxy-1,2-ethanediyl), alpha-(phenylmethyl)-omega-(1,1,3,3-tetramethylbutyl)phenoxy).

The surfactant may be present in the binder composition in an amount from 0 to about 10% by weight, from about 0.1% to about 5.0% by weight, or from about 0.15% to about 2.0% by weight, or from about 0.2% to 1.0% by weight, based on the total solids content in the binder composition.

Optionally, the binder composition may contain a dust suppressing agent to reduce or eliminate the presence of inorganic and/or organic particles which may have adverse impact in the subsequent fabrication and installation of the insulation materials. The dust suppressing agent can be any conventional mineral oil, mineral oil emulsion, natural or synthetic oil, bio-based oil, or lubricant, such as, but not limited to, silicone and silicone emulsions, polyethylene glycol, as well as any petroleum or non-petroleum oil with a high flash point to minimize the evaporation of the oil inside the oven.

In any of the exemplary embodiments, the binder composition may include up to about 10% by weight of a dust suppressing agent, including up to about 8% by weight, or up to about 6% by weight. In any of the exemplary embodiments, the binder composition may include between 0 and 10% by weight of a dust suppressing agent, including about 1.0% by weight to about 7.0 % by weight, or about 1.5% by weight to about 6.5% by weight, or about 2.0% by weight to about 6.0% by weight, or about 2.5% by weight to 5.8% by weight, based on the total solids content in the binder composition.

The binder composition further includes water to dissolve or disperse the active solids for application onto the reinforcement fibers. Water may be added in an amount sufficient to dilute the binder composition to a viscosity that is suitable for its application to the reinforcement fibers and to achieve a desired solids content on the fibers. It has been discovered that the present binder composition may contain a lower solids content than traditional phenol-urea formaldehyde or carbohydrate-based binder compositions. In particular, the binder composition may comprise 3 % to 35% by weight of binder solids, including without limitation, 10% to 30%, 12% to 20%, and 15% to 19% by weight of binder solids.

The binder content on a product may be measured as loss on ignition (LOI). In any of the exemplary embodiments, the LOI on the glass fibers forming an insulation product may be 0.1% to 50%, including without limitation, 0.15% to 10%, 0.2% to 8%, and 0.3% to 5%.

In any of the exemplary embodiments, the binder composition may also include one or more additives, such as an extender, a crosslinking density enhancer, a deodorant, an antioxidant, a biocide, a moisture resistant agent, or combinations thereof. Optionally, the binder may comprise, without limitation, dyes, pigments, additional fillers, colorants, UV stabilizers, thermal stabilizers, anti-foaming agents, emulsifiers, preservatives (*e.g.*, sodium benzoate), corrosion inhibitors, and mixtures thereof. Other additives may be added to the binder composition for the improvement of process and product performance. Additives may be present in the binder composition from trace amounts (such as < about 0.1% by weight the binder composition) up to about 10% by weight of the total solids in the binder composition.

In any of the exemplary embodiments, the binder composition may be free or substantially free of a monomeric carboxylic acid component. Exemplary monomeric polycarboxylic acid components include aconitic acid, adipic acid, azelaic acid, butane tetra carboxylic acid dihydrate, butane tricarboxylic acid, chlorendic anhydride, citraconic acid, citric acid, dicyclopentadiene-maleic acid adducts, diethylenetriamine pentacetic acid pentasodium salt, adducts of dipentene and maleic anhydride, endomethylenehexachlorophthalic anhydride, fully maleated rosin, maleated tall oil fatty acids, fumaric acid, glutaric acid, isophthalic acid, itaconic acid, maleated rosin-oxidize unsaturation with potassium peroxide to alcohol then carboxylic acid, malic acid, maleic anhydride, mesaconic acid, oxalic acid, phthalic anhydride, polylactic acid, sebacic acid, succinic acid, tartaric acid, terephthalic acid, tetrabromophthalic anhydride, tetrachlorophthalic anhydride, tetrahydrophthalic anhydride, trimellitic anhydride, and trimesic acid.

The binder compositions disclosed herein may be used to manufacture fibrous insulation products, such as fiberglass or mineral wool insulation products. Thus, aspects of the present inventive concepts are also directed to a method for producing an insulation product and includes the steps of contacting mineral wool and/or glass fibers with a binder composition as disclosed herein. The insulation product may comprise a facer on one or both of its major surfaces. The facer may be any type of facing substrate known in the art such as, for example, a nonwoven mat, a foil mat, a polymeric surfacing mat, a woven textile, and the like.

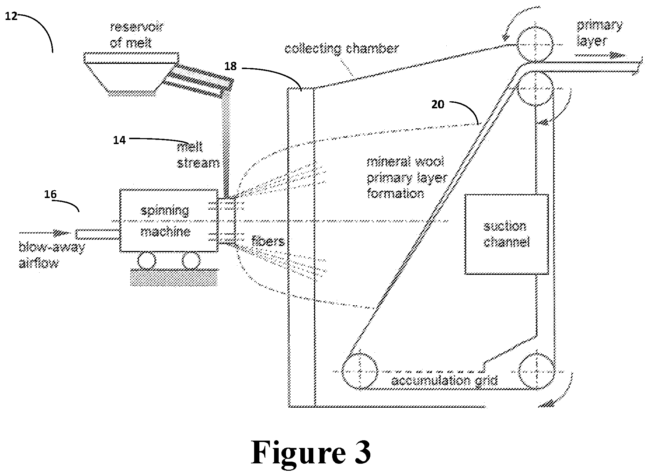

An exemplary method for producing a mineral wool product according to the present invention is outlined in Figure 3. A melt of raw mineral materials is prepared in a reservoir 12 and a melt stream 14 is descended into a spinning machine 16 (such as a centrifugal spinner), where the melt is fiberized and blown into a collection chamber 18, forming a mineral wool web on a collection belt 20. The binder composition may be applied to the mineral wool fibers before collection on the collection belt, as the fibers are being collected, or after the formation of the mineral wool web. The binder composition may be applied to the mineral wool fibers by known means, such as, for example, by spraying. The binder-coated mineral wool web is then heated in a conventional curing oven to cure the binder-coated mineral wool web, forming a mineral wool product. The mineral wool web may be subjected to compression to obtain a desired final product thickness.

Curing may be carried out in a curing oven at conventional temperatures, such as, for example from about 200 °C to about 400 °C, such as from about 225 °C to about 350 °C, and from about 230 °C to about 300 °C.

Fibrous insulation products may be characterized and categorized by many different properties, one of which is density. Density may range broadly from about 3.2 kg/m³ to as high as about 350 kg/m³, depending on the product. Low or light density insulation batts and blankets typically have densities between about 3.2 kg/m³ and about 128.15 kg/m³, more commonly from about 4.8 kg/m³ to about 64 kg/m³, and have applications rates of about 0.1-5% LOI. Products such as residential insulation batts may fall in this group.

Fibrous insulation products can be provided in other forms including board (a heated and compressed batt) and molding media (an alternative form of heated and compressed batt) for use in different applications. Fibrous insulation products also include higher density products having densities from about 160 kg/m³ to about 320.40 kg/m³, (and often having binder LOI of about 1%-5%) and medium density products more typically having a density from about 16 kg/m³ to about 160 kg/m³, (and having binder LOI of about 1%-5%) such as boards and panels. Medium and higher density insulation products may be used in industrial and/or commercial applications, including but not limited to metal building insulation, pipe or tank insulation, insulative ceiling and wall panels, roofing panels, duct boards and HVAC insulation, appliance and automotive insulation, etc.

Another property useful for categorization is the rigidity of the product. Residential insulation batts are typically quite flexible and they can be compressed into rolls or batts while recovering their "loft" upon decompression. This may be referred to herein as "recovery." In contrast, other fibrous products, such as ceiling tiles, wall panels, foundation boards and certain pipe insulation to mention a few, are quite rigid and inflexible by design. These products will flex very little and are unlikely to be adapted or conformed to a particular space.

Formed or shaped products may include a further step, optionally during cure, that compresses, molds or shapes the product to its specific final shape. Rigid boards are a type of shaped product, the shape being planar. Other shaped products may be formed by dies or molds or other forming apparatus. Rigidity may be imparted by the use of higher density of fibers and/or by higher levels of binder application. As an alternative to rotary fiberizing, some fibrous insulation products, particularly higher density, non-woven insulation products, may be manufactured by an air-laid or wet-laid process using premade fibers of glass, mineral wool, or polymers that are scattered into a random orientation and contacted with binder to form the product.

"Product properties" or "mechanical properties" refers to a variety of testable physical properties that insulation products possess. These may include at least the following common properties: "Recovery," which is the ability of the batt or blanket to resume its original or designed thickness following release from compression during packaging or storage. It may be tested by measuring the post-compression height of a product of known or intended nominal thickness, or by other suitable means. "Stiffness" or "sag," which refers to the ability of a batt or blanket to remain rigid and hold its linear shape. It is measured by draping a fixed length section over a fulcrum and measuring the angular extent of bending deflection, or sag. Lower values indicate a stiffer and more desirable product property. "Tensile Strength," which refers to the force that is required to tear the fibrous product in two. It is typically measured in both the machine direction (MD or X-axis) and in the cross machine direction ("CD" or "XMD" or Y-axis); and sometimes in a depth or Z-axis direction as well. "Compressive Strength," which refers to the force that is required compress the fibrous insulation product. This may be measured as the force required to compress the batt (or package) a predetermined distance, or as the distance compressed by a predetermined force. It may be measured in any of three directions as with tensile strength, but CD is most typical.

Of course, other product properties may also be used in the evaluation of final product, but the above product properties are ones found important to consumers of insulation products. Mechanical product properties may be tested relatively soon after manufacture-a time referred to herein as "initial" or "end of line," But over time, the mechanical properties may degrade so that a more relevant test is one that measures "aged" mechanical properties. Aging may be natural, real-time aging over the course of several months or years. More typically "aging" is simulated in proxy, accelerated aging conditions, as in the case of hot and humid test conditions. While either type of aging produced "aged" properties that can be measured, the accelerated versions are reasonable proxies that can be tested in a matter of days rather than months.

It should be appreciated that, so some extent, the absolute measures of these mechanical product properties may be dependent on how much binder is applied to the fibers. Denser and more rigid products are typically manufactured, in part, by using higher levels of binder. The measure of how much binder is applied to fiber products is known as LOI, or loss on ignition, measured by the weight difference after burning off the organic binder components.

The fibrous insulation products produced in accordance with the present inventive concepts demonstrate improved properties compared to a fibrous insulation product formed with an otherwise identical binder composition that does not include the additive blend. One such improved property includes tensile strength under hot/humid conditions (65 °C/95% relative humidity), both immediately upon manufacture (end of line) and after aging.

For instance, with regard to mineral wool insulation products produced in accordance with the present inventive concepts having an LOI of about 2.5%-3.7% and a density of above 50 kg/m³, such products demonstrate a tensile strength in the Y-direction according to EN1607 of at least 40 kPa immediately upon manufacture and maintain at least 50% of the tensile strength after 28 days under hot/humid conditions, including at least 53% of the tensile strength, at least 55% of the tensile strength, at least 58% of the tensile strength, and at least 60% of the tensile strength. In any of the exemplary embodiments disclosed herein, the mineral wool insulation products according to the present inventive concepts having an LOI of about 2.5% to 3.7% may have a tensile strength in the Y-direction according to EN1607 between 40 kPa and 80 kPa immediately upon manufacture, including between 42 kPa and 75 kPa, and between 45 kPa and 72 kPa.

With regard to mineral wool insulation products produced in accordance with the present inventive concepts having an LOI of about 2.4% or below and densities of 52 kg/m³ or below, such products demonstrate a tensile strength in the machine direction according to EN1608 of at least 3.0 kPa, such as between 3.5 kPa and 8 kPa, between 3.8 kPa and 7.5 kPa, and between 4.0 kPa and 6.0 kPa. In the cross direction, mineral wool insulation products produced in accordance with the present inventive concepts having an LOI of about 2.4% or below and densities of 52 kg/m³, demonstrate a tensile strength according to EN1608 of at least 7.0 kPa, such as between 7.5 kPa and 20 kPa, between 8.0 kPa and 15.0 kPa, and between 10.0 kPa and 14.0 kPa.

The mineral wool insulation products produced in accordance with the present inventive concepts further demonstrate improved compressive strength, compared to a mineral wool insulation product formed with an otherwise identical binder composition that does not include the additive blend. The compressive strength was measured and tested on a sample using a standard EN826 test method. The mineral wool insulation board products formed in accordance with the present inventive concepts having an LOI of 2.5% - 3.7% demonstrate a compressive strength of at least 12 kPa, including at least 13 kPa, and at least 15 kPa. The mineral wool insulation board products formed in accordance with the present inventive concepts having an LOI of 2.4% and below demonstrate a compressive strength of at least 1.0 kPa, including at least 1.3 kPa, and at least 1.5 kPa.

Additionally, the mineral wool insulation products produced in accordance with the present inventive concepts further demonstrate reduced tackiness, compared to a mineral wool insulation product formed with an otherwise identical binder composition that does not include the additive blend. The mineral wool insulation board products formed in accordance with the present inventive concepts demonstrate a peak tack force of no greater than 80 grams at 60% binder solids.

Although the subject binder composition has a reduced tackiness, the binder composition does so without sacrificing the hydrophobicity of the insulation product formed therewith. The insulation product hydrophobicity is measured by the product's water absorption.

Having generally described this invention, a further understanding can be obtained by reference to certain specific examples illustrated below which are provided for purposes of illustration only and are not intended to be all inclusive or limiting unless otherwise specified.

### EXAMPLE 1

Exemplary binder composition were prepared comprising the novel additive blend and/or an increased silane concentration, as outlined in Table 2. A comparative binder composition was also prepared including a conventional amount of silane (0.2 wt.%) *(See* Table 2, Comparative Example 1). Each binder composition included a polyacrylic acid cross-linking agent, a polyol, and a sodium hypophosphite catalyst. Examples 1-6 and Comparative Example 1 also include a protective agent that was first mixed with the polyacrylic acid cross-linking agent to form a binder premix. The binder premix was diluted with water, and various additives were included, as set forth below in Table 2, to produce the final binder composition. Each of the exemplary binder compositions are listed below:

**Table 2**

| | Comp. Ex. 1 | EX. 1 | EX. 2 | EX. 3 | EX. 4 | EX. 5 | EX. 6 | EX. 7 | EX. 8 |
|---|---|---|---|---|---|---|---|---|---|
| Triethanolamine | 20.21 | 20.03 | 19.60 | ---- | ---- | ---- | ---- | ---- | ---- |
| Sorbitol | ---- | ---- | ---- | 25.84 | 25.29 | 23.65 | 23.14 | ---- | ---- |
| Pentaerythritol | ---- | ---- | ---- | ---- | ---- | ---- | ---- | 15.78 | 14.46 |
| Polyacrylic Acid | 66.51 | 65.95 | 64.53 | 60.30 | 59.00 | 55.19 | 54.00 | 67.29 | 61.66 |
| Sodium Hypophosphite | 1.33 | 1.32 | 1.29 | 1.21 | 1.18 | 1.10 | 1.08 | 1.25 | 1.14 |
| Ammonium Hydroxide | 5.80 | 5.75 | 5.63 | 5.70 | 5.58 | 5.22 | 5.11 | ---- | ---- |
| Sodium hydroxide | ---- | ---- | ---- | ---- | ---- | ---- | ---- | 6.73 | 6.17 |
| Surfynol 465 | 0.25 | 0.25 | 0.25 | 0.25 | 0.25 | 0.25 | 0.25 | 0.25 | 0.25 |
| Silane 989 (1%) | 0.20 | 1.00 | 1.00 | 1.00 | 1.00 | 1.00 | 1.00 | 1.00 | 1.00 |
| Mineral Oil Emulsion | 5.70 | 5.70 | 5.70 | 5.70 | 5.70 | 5.70 | 5.70 | 5.70 | 5.70 |
| PDMS | ---- | ---- | 2.00 | ---- | 2.00 | ---- | 2.00 | 2.00 | 2.00 |
| Glycerol | ---- | ---- | ---- | ---- | ---- | 7.88 | 7.71 | ---- | 7.61 |

The above binder compositions were prepared and diluted to a particular LOI, as detailed below and applied to mineral wool via a typical mineral wool production line with a throughput of 4.5 tons/hour. Additional water was administrated through an injection system to minimize the fiber sticking to the collection conveyer. A primary mineral wool layer was cross-lapped with additional mineral wool layers to produce a desired product density before passing the mineral wool slab into the curing oven. The curing oven temperature was set to 250 °C to 300 °C.

The mineral wool slab products were collected and comprehensive standard testing was conducted. The results provided in Tables 3-6 exemplify the improved mineral wool product performance imparted by the inventive binder compositions comprising a protective agent, compared to the product properties imparted by similar acidic binder compositions, excluding such a protective agent. The test methods for each property is provided below.

Compressive Strength at 10% Strain: A standard EN826 test method was employed for the sample preparation and testing. The mineral wool slabs were 100 mm thick. The mineral wool slabs were placed centrally between the two plates of an Instron or equivalent compression testing instrument. The testing instrument was used to compress the specimen until a strain of 10% has been reached, providing a compressive stress at 10% strain. The compressive strength at 10% strain was calculated based upon the following equation: ${σ}_{m} = 103 ⋅ {F}_{m} / {A}_{0} \left[kPa\right] *$
*F₁₀ = Force corresponding to -10% deformation [N]
Fₘ = Maximum force [N]
A₀ = Initial cross-section area [m2].

Swelling (%): A pressure cooker (alternatively an autoclave) is used to determine the swelling potential of the product. This treatment is a supplement to the behavior of the product that is stored in tropic box and can in shorter time indicate on problems with aging of the product. In the pressure cooker the product is stored 15 min at 0.8-1 bar pressure and 121 °C (autoclave 2.5 h at 2 bar and 134 °C). Swelling (%) is the net increase in volume after treatment in pressure cooker (alternatively autoclave).

Water Absorption (*Wₚ*) (EN 1609 and EN12087): Sample products having a dimension of 200 mm x 200 mm were weighed to determine the sample's initial mass (*m₀*). The sample was then placed on a water surface and a weight was applied such that the lower surface of the sample is 1 cm under the water surface. For short term partial immersion, the sample was left in the water for 24 hours. For long term partial immersion, the samples were left in the water for 28 days. The samples were then dried for 10 minutes and weighed again to determine the sample's final mass (*m₁*). The water absorption is the difference between a sample's initial mass and final mass (Δm) divided by the bottom surface area of the sample product (A (kg/m²)). Accordingly, water absorption may be determined by the following equation: *Wₚ = (m₁-m₀)*/*A.*

Tensile Strength in Y-Direction (EN1607): Sample products in Y orientation were prepared having a dimension of 100 mm X 100 mm and plywood plates were glued on both ends of the machines Y direction. The samples were attached to a tensile test jig and the maximum force was recorded as the tensile strength. The sample products were tested: 1) at end of the line (EOL), 2) after placement in a Tropic Box for 1 day, 3) for 7 days, and 4) for 28 days for aging and hot/humid conditioning before tensile testing. Conditions in the Tropic Box included a temperature of 65 °C and 95% relative humidity. The tensile retained percentage after 28 days in the Tropic Box is listed as Res % (Tensile after 28 days divided by tensile end of line).

**Table 3**

| Product Performance | | | | | | | | |
|---|---|---|---|---|---|---|---|---|
| Example | LOI % | Density Kg/m³ | Compression behavior (EN826) kPa | Water Absorption, short (1 d) (EN 1609) (kg/m²) | | Water Absorption, long (28 d) (EN12087) (kg/m²) | | Swelling (%) |
| | | | | Top | Bottom | Top | Bottom | |
| Comp. Ex. 1 | 2.5-3.5 | 54.9 | 11.2 | 0.6 | 0.3 | 1.3 | 0.6 | 0.9 |
| Ex. 1 | 2.5 | 55.5 | 13.3 | 0.4 | 0.3 | 1.2 | 0.7 | 0.7 |
| Ex. 2 | 2.9 | 57.1 | 12.0 | 0.1 | 0.1 | 0.1 | 0.1 | 0.7 |
| Ex. 3 | 2.6 | 57.3 | 13.5 | 0.3 | 0.3 | 1.0 | 0.6 | 1.6 |
| Ex. 4 | 3.7 | 56.1 | 14.2 | 0.1 | 0.1 | 0.1 | 0.1 | 0.7 |
| Ex. 5 | 2.7 | 57.4 | 17 | 0.4 | 0.4 | 1.3 | 0.9 | 1.1 |
| Ex.7 | 2.3 | 52.3 | 13.5 | 0.3 | 0.3 | 1.1 | 0.8 | 0.8 |
| Ex. 8 | 2.6 | 60.5 | 15.8 | 0.1 | 0.2 | 0.4 | 0.6 | 0.1 |

As illustrated in Table 3, each of Examples 1-5 and 7-8 illustrate an increased compressive strength, compared to Comparative Example 1 that excludes the additive blend or increased silane concentration. Additionally, each of Examples 1-5 and 7-8 demonstrated an equivalent or reduced water absorption after both 1 day (EN 1609) and after 28 days (EN 12087) on the top of the mineral wool slab. Additionally, Examples 2 and 4, which include both a high concentration of silane (1.0 wt.%) and 2.0 wt.% PDMS, demonstrated an equivalent or reduced water absorption after both 1 day and after 28 days on the bottom of the mineral wool slab. Furthermore, Comparative Example 1, with a conventional concentration of silane (0.2 wt.%) and without the additive blend, demonstrated a high occurrence of swelling (0.9 %), compared to Examples 1, including 1.0 wt.% silane, Examples 2, 4, and 7 including 1.0 wt.% silane and 2.0 wt. % PDMS, and Example 8 including 1.0 wt.% silane, 2.0 wt.% PDMS, and 10 wt.% glycerol. Examples 3 and 5 demonstrate slightly increased swelling, due to the lack of silicone (PDMS) in the composition.

**Table 4**

| Product Performance | | | | | | | | | | |
|---|---|---|---|---|---|---|---|---|---|---|
| Example | Tensile strength (kPa)(EN1607), Y (cross) - direction Tropic Box | | | | | Tensile strength (kPa)(EN1607), Z (thickness) - direction Tropic Box | | | | |
| | End of Line | 1Day Tensile | 28 Day Tensile | 1Day Rest % | 28Day Rest % | End of Line | 1Day Tensile | 28Day Tensile | 1Day Rest % | 28Day Rest % |
| Comp. EX. 1 | 55.1 | 27.9 | 11.0 | 51 | 20 | 7 | 2.6 | 0 | 37 | 0 |
| Ex. 1 | 48.1 | 45.7 | 19.0 | 95 | 40 | 6.6 | 4.4 | 2.5 | 67 | 38 |
| Ex. 2 | 44.3 | 24.5 | 6.5 | 55 | 15 | 5.2 | 2.1 | 0 | 40 | 0 |
| Ex. 3 | 52.0 | 37.7 | 31.0 | 73 | 60 | 6.9 | 4.1 | 4.5 | 59 | 65 |
| Ex. 4 | 53.6 | 31.0 | 33.9 | 58 | 63 | 6 | 4.4 | 2.7 | 73 | 45 |
| Ex. 5 | 70.9 | 53.2 | 47.4 | 75 | 67 | 11 | 8.3 | 6.4 | 75 | 58 |
| Ex. 7 | 46.8 | 37.2 | 28.1 | 79 | 60 | 6.4 | 4.4 | 3.4 | 69 | 53 |
| Ex. 8 | 54.8 | 41.9 | 35.4 | 76 | 65 | 9.4 | 7.6 | 6.2 | 81 | 66 |

As illustrated in Table 4, each of Examples 5 and 8, comprising 1.0 wt.% silane and 10 wt.% glycerol, demonstrated significant improvement in tensile strength in the Y and Z direction, beginning at the end of the forming line and after 1 and 28 days in hot/humid conditions. Additionally, although Examples 1 and 7 demonstrated slightly lower tensile strengths in the Y and Z directions at the end of the line, both mineral wool slabs maintained a higher tensile strength after 1 and 28 days in hot/humid conditions, compared to Comparative Example 1. Examples 3 and 4 demonstrated higher tensile strengths in the Y direction at the end of the line, and maintained a higher tensile strength after 1 and 28 days in hot/humid conditions in both the Y and Z directions, compared to Comparative Example 1.

As illustrated in Table 5, below, the binder compositions from Examples 3-6 (detailed in Table 2) were diluted to an LOI of 0.7 % - 2.4% and then applied to mineral fibers and cured to produce mineral wool insulation products having a density between 39 and 52 kg/m³. The samples below depicted by an (a) or (b) indicate that the same binder composition was used at two different LOIs.

**Table 5**

| Product Performance | | | | | | | | |
|---|---|---|---|---|---|---|---|---|
| Example | LOI % | Density Kg/m³ | Compression behavior (EN826) kPa | Water Absorption, short (1 d) (kg/m²) | | Water Absorption, long (28 d)(kg/m²) | | Swelling (%) |
| | | | | Top | Bottom | Top | Bottom | |
| Ex. 3 | 1.5 | 39 | 1.4 | 2.0 | 0.2 | 2.7 | 0.4 | 6.5 |
| Ex. 4a | 0.7 | x | 0.4 | 0.1 | 0.2 | x | x | 18 |
| Ex. 4b | 1.5 | 45 | 1.5 | 0.52 | 0.1 | 1.2 | 0.4 | 4.4 |
| Ex. 5 | 1.6 | 48 | 1.5 | 0.6 | 0.2 | 1.1 | 0.5 | 4.0 |
| Ex. 6a | 0.7 | x | 1.4 | 0.1 | 0.1 | x | x | 10 |
| Ex. 6b | 2.4 | 52 | 1.1 | 0.1 | 0.1 | 0.1 | 0.1 | 3.7 |

As illustrated in Table 5, each of Examples 3, and 4b-6 illustrate similar compressive strengths, compared to Example 4a having a low LOI of 0.7. Example 4 does not include glycerol, which contributes to the lower compressive strength at a low LOI (compared to Example 6a). Examples 4a and 6a demonstrated a higher occurrence of swelling, which is caused by the low LOI. However, a swelling percentage below 20% is acceptable performance.

**Table 6**

| Product Performance | | | |
|---|---|---|---|
| Example | LOI % | Tensile strength (kPa)(EN1608), Machine Direction | Tensile strength (kPa)(EN1608), Cross-Direction |
| Ex. 3 | 1.5 | 3.9 | 7.7 |
| Ex. 4a | 0.7 | 1.2 | 2.4 |
| Ex. 4b | 1.5 | 4.9 | 10.8 |
| Ex. 5 | 1.6 | 5.6 | 13.7 |
| Ex. 6a | 0.7 | 3.6 | 10.0 |
| Ex. 6b | 2.4 | 4.7 | 11.5 |

As illustrated in Table 6, Examples 4a and 6a, with an LOI of only 0.7%, demonstrated lower tensile strengths, comparatively, but still demonstrated acceptable performance.

### EXAMPLE 2

Exemplary binder composition were prepared comprising various additive blends and applied to a fiberglass substrate, forming a binder-infused fiberglass substrate (BIFS). The binder compositions are provided below in Table 7.

**Table 7**

| | Comp. Ex. A (wt.%) | Ex. A (wt.%) | Ex. B (wt.%) | Ex. C (wt.%) | Ex. D (wt.%) | Ex. E (wt.%) | Ex. F (wt.%) | Ex. G (wt.%) |
|---|---|---|---|---|---|---|---|---|
| Sorbitol | 30.00 | 27.27 | 27.27 | 28.57 | 27.27 | 27.27 | 27.27 | 27.27 |
| Polyacrylic Acid | 70.00 | 63.64 | 63.64 | 66.67 | 63.64 | 63.64 | 63.64 | 63.64 |
| MOPEG | ---- | ---- | 9.09 | ---- | ---- | ---- | 4.55 | ---- |
| Glucopon | ---- | ---- | ---- | ---- | ---- | ---- | ---- | 9.09 |
| ML155 | ---- | ---- | ---- | 4.76 | 9.09 | ---- | 4.55 | ---- |
| Surfynol | ---- | ---- | ---- | ---- | ---- | 9.09 | ---- | ---- |
| Glycerol | ---- | 9.09 | ---- | ---- | ---- | ---- | ---- | ---- |

The BIFS were analyzed to measure the tack of the binder-infused substrate. In order to obtain results from the tack measurement instrument, the concentration of the binder needed to be increased from 31% to 60%. To do this, 5 grams of a 31% binder solution was applied to a fiberglass substrate. The binder-infused fiberglass substrate was then placed in a moisture balance at 140 °C for 4 minutes and 30 seconds, which increased the binder solution concentration to about 60%. To initiate the tack testing, a texture analyzer (TA XT Plus) was used to measure the peak tack force of the BIFS. A stainless steel probe (TA-57R, 7mm-1"R) was lowered to the sample at 0.5 mm/sec and a 500 g force was applied for 10 seconds before removal at 10 mm/sec.

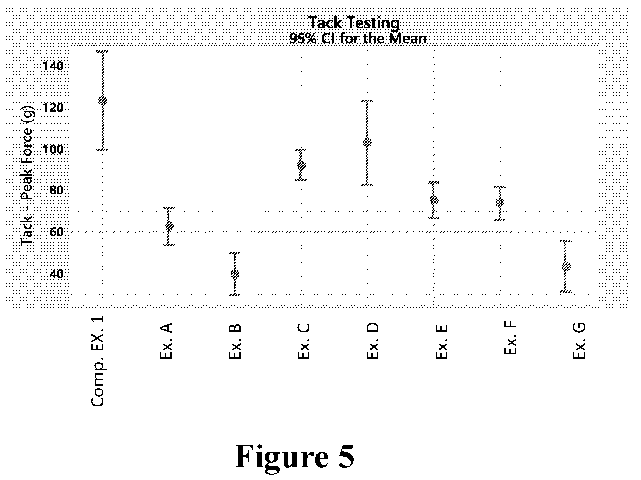

As illustrated in Figure 5, Comparative Example A demonstrated a peak tack force of about 124 g, while each of Examples A-G demonstrated a reduction in peak tack force. Additionally, each Example including 10% of an additive blend, demonstrated a peak task force of less than about 100 g. Examples A, B, and F demonstrated the lowest level of tack, with peak tack forces at about 64 g, about 40 g, and about 43 g, respectively.

The BIFS were then cured in an oven at 430 °F and tested for water absorption. Although a binder composition comprising 10% MOPEG demonstrated the lowest tack, the cured BIFS produced therewith was highly water absorbent. In contrast, the BIFS produced using ML-155 wax (Examples C, D, and F) were highly water resistant, with a contact angle of about 90°.

It will be appreciated that many more detailed aspects of the illustrated products and processes are in large measure, known in the art, and these aspects have been omitted for purposes of concisely presenting the general inventive concepts. Although the present invention has been described with reference to particular means, materials and embodiments, from the foregoing description, one skilled in the art can easily ascertain the essential characteristics of the present disclosure and various changes and modifications can be made to adapt the various uses and characteristics without departing from the scope of the present invention as described above and set forth in the attached claims.

## Claims

1. A low-tack aqueous binder composition comprising:
at least 30.0% by weight of a polymeric crosslinking agent comprising at least two carboxylic acid groups, based on the total solids content of the binder composition;
10.0% to 50.0% by weight of a polyol having at least two hydroxyl groups, based on the total solids content of the binder composition; wherein the polyol comprises a sugar alcohol, an alkanolamine, pentaerythritol, or mixtures thereof;
1.5% to 15.0% by weight of an additive blend comprising one or more process additives, based on the total solids content of the binder composition;
0 to 3.0% by weight of a silane coupling agent, based on the total solids content of the binder composition; and
0 to 10% by weight of a catalyst, based on the total solids in the binder composition,
wherein the sugar alcohol comprises, erythritol, arabitol, xylitol, sorbitol, maltitol, mannitol, iditol, isomaltitol, lactitol, cellobitol, palatinitol, maltotritol, syrups thereof, or mixtures thereof,
wherein the process additives comprise surfactants, glycerol, monooleate polyethylene glycol, silicone, polydimethylsiloxane, waxes, or mixtures thereof,
wherein the aqueous binder composition is free of added formaldehyde, wherein the aqueous binder composition has an uncured pH between 4.0 and 7.0, and wherein the aqueous binder composition has an uncured peak tack force of no greater than 80 grams at 60% binder solids, the uncured peak tack measured according to the method described herein.

2. The low-tack aqueous binder composition of claim 1, wherein the polyol consists of a sugar alcohol, an alkanolamine, pentaerythritol, or mixtures thereof.

3. The low-tack aqueous binder composition of claim 1 or claim 2, wherein the process additives comprise glycerol, polydimethylsiloxane, or a mixture thereof.

4. The low-tack aqueous binder composition of any of claims 1-3, wherein the additive blend comprises at least two process additives.

5. The low-tack aqueous binder composition of any of claims 1-4, wherein the additive blend comprises glycerol in an amount of 5.0% to 15.0% by weight, based on the total solids content of the binder composition.

6. The low-tack aqueous binder composition of any of claims 1-5, wherein the polymeric crosslinking agent comprises a homopolymer or copolymer of acrylic acid.

7. The low-tack aqueous binder composition of any of claims 1-6, wherein the additive blend comprises 0.5% to 5.0% by weight of polydimethylsiloxane, based on the total solids content of the binder composition.

8. The low-tack aqueous binder composition of any of claims 1-6, wherein the additive blend comprises 7.0% to 12% by weight of glycerol and 0.5% to 5.0% by weight of polydimethylsiloxane, based on the total solids content of the binder composition.

9. The low-tack aqueous binder composition of any of claims 1-6, wherein the composition comprises:
50% to 85% of a polymeric cross-linking agent having at least two carboxylic acid groups, based on the total solids content of the binder composition;
1.5% to 15% by weight of an additive blend, based on the total solids content of the binder composition, wherein the additive blend comprises one or more of:
6.5% to 13.0% by weight of glycerol, based on the total solids content of the binder composition; and
1.2% to 3.5% by weight of polydimethylsiloxane, based on the total solids content of the binder composition; and
0.5 to 3.0% by weight of a silane coupling agent.

10. The low-tack aqueous binder composition of any of claims 1 to 9, wherein the catalyst includes an alkali metal salt of a phosphorous-containing organic acid, for example, alkali metal salts of phosphorus acid, hypophosphorus acid, or polyphosphoric acid.

11. A binder composition according to claim 1 comprising:
at least 54% by weight of the polymeric crosslinking agent, the polymeric crosslinking agent being polymeric polycarboxylic acid, based on the total solids content of the aqueous binder composition; and
10.0 to 35.0% by weight of the polyol having at least two hydroxyl groups, based on the total solids content of the aqueous binder composition.

12. A fibrous insulation product comprising:
a plurality of randomly oriented fibers; and
a cross-linked formaldehyde-free binder composition at least partially coating the fibers, wherein prior to crosslinking, the binder composition comprises the binder composition of any of claims 1 to 11,
wherein the fibrous product, at an LOI of 2.4% or below, has a tensile strength in the machine direction according to EN1608 of between 3.0 kPa and 8 kPa.

13. The fibrous insulation product of claim 12, wherein the fibrous product comprises a mineral wool insulation product.

14. The fibrous insulation product of claim 12 or claim 13, wherein a bottom surface of the insulation product demonstrates water absorption of 0.2 kg/m² or less after 1 day according to EN1609.

15. The fibrous insulation product of any of claims 12-14, wherein the fibrous product, at an LOI of 2.4% or below, comprises a compressive strength at 10% strain of at least 1.0 kPa measured according to EN826.

## Patentansprüche

1. Schwach klebrige wässrige Bindemittelzusammensetzung, umfassend:
mindestens 30,0 Gew.-% eines polymeren Vernetzungsmittels, das mindestens zwei Carbonsäuregruppen umfasst, basierend auf dem Gesamtfeststoffgehalt der Bindemittelzusammensetzung;
10,0 bis 50,0 Gew.-% eines Polyols, das mindestens zwei Hydroxylgruppen aufweist, basierend auf dem Gesamtfeststoffgehalt der Bindemittelzusammensetzung; wobei das Polyol einen Zuckeralkohol, ein Alkanolamin, Pentaerythrit oder Mischungen davon umfasst;
1,5 bis 15,0 Gew.-% eines Additivgemischs, das ein oder mehrere Prozessadditive umfasst, basierend auf dem Gesamtfeststoffgehalt der Bindemittelzusammensetzung;
0 bis 3,0 Gew.-% eines Silankopplungsmittels, basierend auf dem Gesamtfeststoffgehalt der Bindemittelzusammensetzung; und
0 bis 10 Gew.-% eines Katalysators, basierend auf den Gesamtfeststoffen in der Bindemittelzusammensetzung,
wobei der Zuckeralkohol Erythrit, Arabit, Xylit, Sorbit, Maltit, Mannit, Idit, Isomaltit, Lactit, Cellobit, Palatinit, Maltotrit, Sirupe davon oder Mischungen davon umfasst,
wobei die Prozessadditive Tenside, Glycerin, Monooleat-Polyethylenglykol, Silikon, Polydimethylsiloxan, Wachse oder Mischungen davon umfassen,
wobei die wässrige Bindemittelzusammensetzung frei von zugesetztem Formaldehyd ist, wobei die wässrige Bindemittelzusammensetzung einen ungehärteten pH-Wert zwischen 4,0 und 7,0 aufweist, und wobei die wässrige Bindemittelzusammensetzung eine ungehärtete Spitzenklebrigkeitskraft von nicht mehr als 80 Gramm bei 60 % Bindemittelfeststoffen aufweist, wobei die ungehärtete Spitzenklebrigkeit gemäß dem hierin beschriebenen Verfahren gemessen wird.

2. Schwach klebrige wässrige Bindemittelzusammensetzung nach Anspruch 1, wobei das Polyol aus einem Zuckeralkohol, einem Alkanolamin, Pentaerythrit oder Mischungen davon besteht.

3. Schwach klebrige wässrige Bindemittelzusammensetzung nach Anspruch 1 oder Anspruch 2, wobei die Prozessadditive Glycerin, Polydimethylsiloxan oder eine Mischung davon umfassen.

4. Schwach klebrige wässrige Bindemittelzusammensetzung nach einem der Ansprüche 1 bis 3, wobei das Additivgemisch mindestens zwei Prozessadditive umfasst.

5. Schwach klebrige wässrige Bindemittelzusammensetzung nach einem der Ansprüche 1 bis 4, wobei das Additivgemisch Glycerin in einer Menge von 5,0 bis 15,0 Gew.-%, basierend auf dem Gesamtfeststoffgehalt der Bindemittelzusammensetzung, umfasst.

6. Schwach klebrige wässrige Bindemittelzusammensetzung nach einem der Ansprüche 1 bis 5, wobei das polymere Vernetzungsmittel ein Homopolymer oder Copolymer von Acrylsäure umfasst.

7. Schwach klebrige wässrige Bindemittelzusammensetzung nach einem der Ansprüche 1 bis 6, wobei das Additivgemisch 0,5 bis 5,0 Gew.-% Polydimethylsiloxan umfasst, basierend auf dem Gesamtfeststoffgehalt der Bindemittelzusammensetzung.

8. Schwach klebrige wässrige Bindemittelzusammensetzung nach einem der Ansprüche 1 bis 6, wobei das Additivgemisch 7,0 Gew.-% bis 12 Gew.-% Glycerin und 0,5 Gew.-% bis 5,0 Gew.-% Polydimethylsiloxan, basierend auf dem Gesamtfeststoffgehalt der Bindemittelzusammensetzung, umfasst.

9. Schwach klebrige wässrige Bindemittelzusammensetzung nach einem der Ansprüche 1 bis 6, wobei die Zusammensetzung umfasst:
50 % bis 85 % eines polymeren Vernetzungsmittels mit mindestens zwei Carbonsäuregruppen, basierend auf dem Gesamtfeststoffgehalt der Bindemittelzusammensetzung;
1,5 bis 15 Gew.-% eines Additivgemischs, basierend auf dem Gesamtfeststoffgehalt der Bindemittelzusammensetzung, wobei das Additivgemisch eines oder mehrere umfasst von:
6,5 bis 13,0 Gew.-% Glycerin, basierend auf dem Gesamtfeststoffgehalt der Bindemittelzusammensetzung; und
1,2 bis 3,5 Gew.-% Polydimethylsiloxan, basierend auf dem Gesamtfeststoffgehalt der Bindemittelzusammensetzung; und
0,5 bis 3,0 Gew.-% eines Silankopplungsmittels.

10. Schwach klebrige wässrige Bindemittelzusammensetzung nach einem der Ansprüche 1 bis 9, wobei der Katalysator ein Alkalimetallsalz einer phosphorhaltigen organischen Säure einschließt, zum Beispiel Alkalimetallsalze von Phosphorsäure, Hypophosphorsäure oder Polyphosphorsäure.

11. Bindemittelzusammensetzung nach Anspruch 1, umfassend:
mindestens 54 Gew.-% des polymeren Vernetzungsmittels, wobei das polymere Vernetzungsmittel polymere Polycarbonsäure ist, basierend auf dem Gesamtfeststoffgehalt der wässrigen Bindemittelzusammensetzung; und
10,0 bis 35,0 Gew.-% des Polyols, das mindestens zwei Hydroxylgruppen aufweist, basierend auf dem Gesamtfeststoffgehalt der wässrigen Bindemittelzusammensetzung.

12. Faserisolierprodukt, umfassend:
eine Vielzahl von zufällig orientierten Fasern; und
eine vernetzte formaldehydfreie Bindemittelzusammensetzung, die mindestens teilweise die Fasern beschichtet, wobei vor der Vernetzung die Bindemittelzusammensetzung die Bindemittelzusammensetzung nach einem der Ansprüche 1 bis 11 umfasst,
wobei das Faserprodukt bei einem LOI von 2,4 % oder darunter eine Zugfestigkeit in der Maschinenrichtung nach EN1608 zwischen 3,0 kPa und 8 kPa aufweist.

13. Faserisolierprodukt nach Anspruch 12, wobei das Faserprodukt ein Mineralwollisolierprodukt umfasst.

14. Faserisolierprodukt nach Anspruch 12 oder Anspruch 13, wobei eine untere Oberfläche des Isolierprodukts eine Wasseraufnahme von 0,2 kg/m² oder weniger nach 1 Tag nach EN1609 zeigt.

15. Faserisolierprodukt nach einem der Ansprüche 12 bis 14, wobei das Faserprodukt bei einem LOI von 2,4 % oder darunter eine Druckfestigkeit bei 10 % Stauchung von mindestens 1,0 kPa, gemessen nach EN826, umfasst.

## Revendications

1. Composition de liant aqueuse à faible pégosité comprenant :
au moins 30,0 % en poids d'un agent de réticulation polymère comprenant au moins deux groupes acide carboxylique, sur la base de la teneur totale en matières solides de la composition de liant ;
10,0 % à 50,0 % en poids d'un polyol ayant au moins deux groupes hydroxyle, sur la base de la teneur totale en matières solides de la composition de liant ; dans laquelle le polyol comprend un alcool de sucre, une alcanolamine, du pentaérythritol, ou des mélanges de ceux-ci ;
1,5 % à 15,0 % en poids d'un mélange d'additifs comprenant un ou plusieurs additifs de processus, sur la base de la teneur totale en matières solides de la composition de liant ;
0 à 3,0 % en poids d'un agent de couplage silane, sur la basse de la teneur totale en matières solides de la composition de liant ; et
0 à 10 % en poids d'un catalyseur, sur la base des matières solides totales dans la composition de liant,
dans laquelle l'alcool de sucre comprend, l'érythritol, l'arabitol, le xylitol, le sorbitol, le maltitol, le mannitol, l'iditol, l'isomaltitol, le lactitol, le cellobitol, le palatinitol, le maltotritol, des sirops de ceux-ci, ou des mélanges de ceux-ci,
dans laquelle les additifs de processus comprennent des tensioactifs, du glycérol, du monooléate de polyéthylène glycol, de la silicone, du polydiméthylsiloxane, des cires, ou des mélanges de ceux-ci,
dans laquelle la composition de liant aqueuse est exempte de formaldéhyde ajouté, dans laquelle la composition de liant aqueuse a un pH à l'état non durci compris entre 4,0 et 7,0, et dans laquelle la composition de liant aqueuse a une force de pégosité maximale à l'état non durci ne dépassant pas 80 grammes à 60 % de matières solides de liant, la pégosité maximale à l'état non durci étant mesurée selon le procédé décrit ici.

2. Composition de liant aqueuse à faible pégosité selon la revendication 1, dans laquelle le polyol est constitué d'un alcool de sucre, d'une alcanolamine, de pentaérythritol ou de mélanges de ceux-ci.

3. Composition de liant aqueuse à faible pégosité selon la revendication 1 ou la revendication 2, dans laquelle les additifs de processus comprennent du glycérol, du polydiméthylsiloxane, ou un mélange de ceux-ci.

4. Composition de liant aqueuse à faible pégosité selon l'une quelconque des revendications 1 à 3, dans laquelle le mélange d'additifs comprend au moins deux additifs de processus.

5. Composition de liant aqueuse à faible pégosité selon l'une quelconque des revendications 1 à 4, dans laquelle le mélange d'additifs comprend du glycérol en une quantité de 5,0 % à 15,0 % en poids, sur la base de la teneur totale en matières solides de la composition de liant.

6. Composition de liant aqueuse à faible pégosité selon l'une quelconque des revendications 1 à 5, dans laquelle l'agent de réticulation polymère comprend un homopolymère ou un copolymère d'acide acrylique.

7. Composition de liant aqueuse à faible pégosité selon l'une quelconque des revendications 1 à 6, dans laquelle le mélange d'additifs comprend de 0,5 % à 5,0 % en poids de polydiméthylsiloxane, sur la base de la teneur totale en matières solides de la composition de liant.

8. Composition de liant aqueuse à faible pégosité selon l'une quelconque des revendications 1 à 6, dans laquelle le mélange d'additifs comprend de 7,0 % à 12 % en poids de glycérol et de 0,5 % à 5,0 % en poids de polydiméthylsiloxane, sur la base de la teneur totale en matières solides de la composition de liant.

9. Composition de liant aqueuse à faible pégosité selon l'une quelconque des revendications 1 à 6, dans laquelle la composition comprend :
50 % à 85 % d'un agent de réticulation polymère ayant au moins deux groupes acide carboxylique, sur la base de la teneur totale en matières solides de la composition de liant ;
1,5 % à 15 % en poids d'un mélange d'additifs, sur la base de la teneur totale en matières solides de la composition de liant, dans laquelle le mélange d'additifs comprend un ou plusieurs parmi :
6,5 % à 13,0 % en poids de glycérol, sur la base de la teneur totale en matières solides de la composition de liant ; et
1,2 % à 3,5 % en poids de polydiméthylsiloxane, sur la base de la teneur totale en matières solides de la composition de liant ; et
0,5 à 3,0 % en poids d'un agent de couplage silane.

10. Composition de liant aqueuse à faible pégosité selon l'une quelconque des revendications 1 à 9, dans laquelle le catalyseur comporte un sel de métal alcalin d'un acide organique contenant du phosphore, par exemple, des sels de métaux alcalins d'acide phosphoreux, d'acide hypophosphoreux ou d'acide polyphosphorique.

11. Composition de liant selon la revendication 1, comprenant :
au moins 54 % en poids de l'agent de réticulation polymère, l'agent de réticulation polymère étant un acide polycarboxylique polymère, sur la base de la teneur totale en matières solides de la composition de liant aqueuse ; et
10,0 à 35,0 % en poids du polyol ayant au moins deux groupes hydroxyle, sur la base de la teneur totale en matières solides de la composition de liant aqueuse.

12. Produit d'isolation fibreux comprenant :
une pluralité de fibres orientées de manière aléatoire ; et
une composition de liant réticulée exempte de formaldéhyde revêtant au moins partiellement les fibres, dans lequel, avant la réticulation, la composition de liant comprend la composition de liant selon l'une quelconque des revendications 1 à 11,
dans lequel le produit fibreux, à une LOI de 2,4 % ou moins, a une résistance à la traction dans le sens machine selon la norme EN1608 comprise entre 3,0 kPa et 8 kPa.

13. Produit d'isolation fibreux selon la revendication 12, dans lequel le produit fibreux comprend un produit d'isolation en laine minérale.

14. Produit d'isolation fibreux selon la revendication 12 ou la revendication 13, dans lequel une surface inférieure du produit d'isolation présente une absorption d'eau de 0,2 kg/m² ou moins après 1 jour selon la norme EN1609.

15. Produit d'isolation fibreux selon l'une quelconque des revendications 12 à 14, dans lequel le produit fibreux, à une LOI de 2,4 % ou moins, comprend une résistance à la compression à 10 % de déformation d'au moins 1,0 kPa mesurée selon la norme EN826.
